# EUROPÄISCHE PATENTSCHRIFT

(11) **EP 1 427 657 B1**
(45) Veröffentlichungstag und Bekanntmachung des Hinweises auf die Patenterteilung: **14.06.2006**
(21) Anmeldenummer: 02774578.5
(22) Anmeldetag: 06.09.2002
(51) Int. Cl.: B65G 53/60

(54) **VORRICHTUNG UND VERFAHREN ZUM ÜBERFÜHREN EINES STAUB-, PULVER-, KORN- ODER GRANULATARTIGEN FÖRDERGUTES AUS EINEM LAGERBEHÄLTER IN EINEN ARBEITS- ODER ÜBERFÜHRUNGSBEHÄLTER OD.DGL. AUFNAHMERAUM**
DEVICE AND METHOD FOR TRANSFERRING A DUSTY, POWDERY, GRAIN-LIKE OR GRANULAR CONVEYED MATERIAL OUT OF A STORAGE RECEPTACLE AND INTO A WORKING OR TRANSFER RECEPTACLE OR A SIMILAR ACCOMMODATING SPACE
DISPOSITIF ET PROCEDE POUR TRANSPORTER UN PRODUIT A TRANSPORTER DE TYPE POUSSIERE, POUDRE, GRAINS OU GRANULES, D'UN RECIPIENT DE STOCKAGE DANS UN RECIPIENT DE TRAVAIL OU DE TRANSPORT OU DANS UN ESPACE DE RECEPTION DE MEME TYPE

(30) Priorität: 10.09.2001 DE 10144528; 13.12.2001 DE 10161281; 27.02.2002 DE 10208316; 26.07.2002 DE 10234013
(43) Veröffentlichungstag der Anmeldung: 16.06.2004
(73) Patentinhaber: Dietrich, Yves, 1316 Chevilly (CH)
(72) Erfinder: Dietrich, Frédéric, Junior, CH-1054 Morrens (CH)
(74) Vertreter: Hiebsch, Gerhard F.
(86) Internationale Anmeldenummer: PCT/EP2002/009989
(87) Internationale Veröffentlichungsnummer: WO 2003/022718

(56) Entgegenhaltungen:
- BE-A- 658 419
- CH-A- 157 807
- DE-A- 3 941 735
- DE-A- 4 113 285
- DE-A- 19 654 648
- LU-A- 65 515

## Beschreibung

Die Erfindung betrifft eine Vorrichtung gemäß dem Oberbegriff des Anspruches 1.

Eine bekannte Vorrichtung dieser Art bietet einen Auffangbehälter mit konischem Bodenbereich an dem -- mit einer Klappe schließbaren -- Austragsquerschnitt an. Diesem liegt im Behälterkopf eine Luftzuführung gegenüber, der zum Behälterraum hin eine Reihe von Filtersäcken vorgelagert sind.

Derartige pneumatische Fördereinrichtungen werden derzeit vor allem in der chemischen, pharmazeutischen Industrie, in der Lebensmittelindustrie und anderen Industriezweigen eingesetzt, in denen pulverförmige Güter gefördert werden müssen. Der große Vorteil dieses Fördersystems liegt darin, dass es ermöglicht, diese Stoffe in einer kontrollierten Atmosphäre zu fördern. Die bekannten Systeme bzw. Anlagen zum Fördern von pulverförmigen Werkstoffen und Schüttgütern sind in den meisten Fällen in der Konstruktion auf das zu fördernde Produkt abgestimmt, weshalb diese Anlagen oft Einzelanfertigungen sind; hierdurch werden die Kosten für solche -- relativ langsam arbeitenden und nur schwer zu reinigenden -- Anlagen verhältnismäßig hoch.

Ein weiteres -- sehr störendes -- Problem bei bekannten Anlagen ist das Verstopfen der Filter nach relativ kurzer Arbeitszeit, wodurch in der Produktion der pulverförmigen Stoffe öfters Störungen auftreten, die zu größeren Kosten durch Produktionsausfälle führen.

Die BE 658 419 beschreibt eine Abscheidevorrichtung für festes Material aus dem Luftstrom einer pneumatischen Saugförderanlage. An eine firstwärtige Zuführleitung für das Fördergut ist ein Arbeitsraum angeschlossen, in den eine Leitung für ein Strömungsmittel mündet; in dieser ist zum Absaugen ein Ventilator angeordnet. Als Filtereinrichtung zum Abscheiden des festen Materials dienen die perforierten Wände einer Innenkammer. Diese sind relativ grobporig und in sich starr. Die Luftabsaugung kann durch eine Klappe unterbrochen werden, so dass das an den perforierten Wänden haftende Granulat selbsttätig herabzufallen vermag. Bodenwärtige Klappen steuern den Granulataustrag.

In der DE 196 54 648 A1 ist eine Abscheidevorrichtung für pulverförmige Stoffe geringer Korngröße aus einem Luftstrom offenbart. Das Feststoff-Luftgemisch wird durch eine seitliche Eintragungsöffnung einer Trennkammer zugeführt. Am oberen Ende der länglichen Trennkammer befindet sich ein den Feststoff zurückhaltendes plattenartiges Rundfilter aus einer Filtermembrane zwischen zwei Gitterlagen. Die Unterseite der Trennkammer enthält eine Austragsöffnung, von der das Fördergut in eine -- ein Schmetterlingsventil enthaltende -- seitliche Austragsleitung gelangt.

In Kenntnis dieser Gegebenheiten hat sich der Erfinder das Ziel gesetzt, die bei diesen Anlagen und Vorrichtungen auftretenden Probleme zu beseitigen und vor allem ein für unterschiedliche Fördergüter geeignetes Fördersystem anzubieten.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß bildet die perforierte Wandung ein Innenrohr, in dessen Innenraum koaxial ein rohrförmiger Filtereinsatz verläuft, der mit dem Gehäuse einen Spaltraum bestimmt sowie einends mit einem an die Zuführleitung angeschlossenen Firstdeckel versehen -- bevorzugt an diesen angeschlossen -- ist. Dazu hat es sich als günstig erwiesen, die Querschnittsform des Filtereinsatzes jener des ihn umgebenden Innenrohres anzupassen. Zudem soll die Längsachse des Gehäuses der Arbeitskammer die Achslage des Filtereinsatzes und/oder des Innenrohres bestimmen. Es hat sich gezeigt, dass durch die Konzeption eines Filterrohres in der Arbeitskammer sowohl der Fördervorgang als auch die Reinigungsarbeiten an der Vorrichtung wesentlich verbessert werden können.

Vorteilhafterweise wird das Innenrohr von einem Firstdeckel des Filtereinsatzes überspannt, wobei dieser Firstdeckel mit einer Firstplatte des umgebenden Gehäuses durch wenig stens eine Spanneinrichtung verbunden ist; Firstdeckel und Firstplatte begrenzen einen an den -- zwischen Gehäuse und Filtereinsatz vorhandenen -- Spaltraum anschließenden Kopfraum, der durch die Firstplatte vom Filterraum des Filtereinsatzes getrennt wird.

Der Firstdeckel trägt in einer bevorzugten Ausgestaltung den Filtereinsatz, der dank dieser Aufhängung spannbar bleibt; erfindungsgemäß ist zumindest in dieser Ausgestaltung die Höhe des Kopfraumes veränderbar. Zudem sollen der Firstdeckel und die Firstplatte durch die sie durchsetzende Zuführleitung verbunden sein, insbesondere durch einen Rohrstutzen. Dieser axiale Rohrstutzen durchsetzt erfindungsgemäß die Firstplatte -- in ihr gleitbar - und ist mit der Zuführleitung verbunden; bevorzugt verläuft der Rohrstutzen als Abschnitt der Zuführleitung im Kopfraum und ist mit einem Einlassventil ausgestattet, das Druck gegen die Einlassrichtung unterbindet.

Als günstig hat es sich zudem erwiesen, den Arbeitsraum an eine Vakuumquelle anschließbar zu gestalten, dies bevorzugt am erwähnten Kopfraum. Die Vakuumquelle und eine Gasquelle sollen in einer Ausgestaltung unter Zwischenschaltung eines Ventils ein gemeinsames Mündungsrohr für die Arbeitskammer aufweisen, das von ihnen wahlweise beaufschlagt zu werden vermag. Das Vakuum dient dem Einsaugen des Fördergutes und das gewählte Störmungsmittel -- also Luft oder Gas -- umspült in der Arbeitskammer den darin befindlichen Filtereinsatz, dringt in dessen Innenraum und fördert das in ihm befindliche Fördergut ab. Dazu soll jenem Ventil in einer Gasleitung der Gasquelle noch ein Einlassventil vorgeordnet sein.

Als günstig hat es sich in einer weiteren Gestaltung erwiesen, die Vakuumquelle mit einem Ventil zu versehen und dieses durch eine Leitung mit dem Einlassventil einer Gasquelle zu verbinden; diese Leitung soll als T-Stück mit einem der Arbeitskammer zugeordneten Mündungsrohr ausgebildet sein, welches an den Kopfraum des Arbeitsraumes angeschlossen ist.

Von besonderer Bedeutung sind vom Gehäuse achswärts abragende Vibrationsorgane, die an das Innenrohr und/oder den Filtereinsatz angeschlossen sind sowie bevorzugt mit einer Frequenz zwischen 20 und 150 Hz arbeiten. Dank dieser Vibratoren -- die in einer bevorzugten Ausgestaltung an die Spanneinrichtung für den Filtereinsatz angeschlossen sind -- wird sowohl der Fördervorgang verbessert als auch das Reinigen des Filters.

Nach einem anderen Merkmal der Erfindung ist der Filterraum an seinem unteren Auslassende -- durch ein Verschlussorgan -- verschließbar ausgebildet; dieses Auslassende ist üblicherweise am Fuße des Filterraumes vorgesehen, kann aber im Falle einer horizontalen Anordnung des Filterraumes auch seinerseits horizontal stehen. Dieses Verschlussorgan kann ein Klappventil sein, ein Schmetterlings-, Schieber- oder Kugelventil, gegebenenfalls auch eine Mehrkammerschleuse. In jedem Falle kann durch dieses Verschlussorgan der Füllstand des Filterraumes bestimmt und der Abfördervorgang eingeleitet werden.

Bevorzugt wird ein Filterraum mit an seinem unteren Ende vorgesehenem Bodendurchbruch des die Arbeitskammer umgebenden Gehäuses; dieser Bodendurchbruch ist durch das erwähnte Verschlussorgan schließbar gestaltet.

Der Bodendurchbruch kann in einer Ausführung in der Deckelplatte eines dem Gehäuse zugeordneten Behälters vorgesehen sein. Nach einem weiteren Merkmal der Erfindung kann auch an der unteren Seite des Filterraumes eine motorgetriebene Schleuseinrichtung zum schrittweisen Übertragen des Fördergutes in einen angeschlossenen Auffangbehälter vorgesehen werden, die gegebenenfalls drehbar und mit mehreren Dosierkammern versehen ist, von denen jeweils eine dem Austragsquerschnitt des Filterraumes vorgesetzt werden kann.

Im Rahmen der Erfindung liegt zudem eine Vorrichtung, deren Filterraum austragsseitig in einen Vibrationskanal mündet, der andernends mit einem Verschlussorgan versehen ist. Letzteren wird bevorzugt ein mit einem Wiegeelement versehener Behälter nachgeordnet.

Der Filtereinsatz ist erfindungsgemäß von runder, dreieckiger oder mehreckiger Querschnittsform. Gleiches gilt auch für das Innenrohr, wobei die Querschnitte beider Komponenten nicht übereinstimmen müssen. Jedoch hat es sich als günstig erwiesen, die Querschnittsform des Filtereinsatzes der Querschnittsform des ihn umgebenden Innenrohres entsprechen zu lassen. Vorteilhaft ist es auch, wenn die Oberfläche des Filtereinsatzes zumindest zwei Dritteln der Querschnittsfläche der Innenrohre entspricht. Ein weiteres Merkmal der Erfindung gibt vor, dass das perforierte Innenrohr runde, dreieckige und/oder polygone Löcher anbietet oder aus einem Drahtnetz gefertigt ist.

Die folgenden Maße werden erfindungsgemäß besonders vorgegeben: ein Durchmesser des Filterrohres zwischen 5 mm und 1000 mm, bevorzugt zwischen 200 mm und 900 mm, 100 mm und 600 mm bzw. zwischen 10 mm und 150 mm, sowie eine Länge des Filterrohres zwischen 25 mm und 5000 mm, vorteilhafterweise zwischen 1000 mm und 4500 mm bzw. zwischen 500 mm und 3000 mm oder zwischen 50 mm und 600 mm.

Im Rahmen der Erfindung liegt auch ein Verfahren zum Überführen eines staub-, pulver-, korn- oder granulatartigen Fördergutes, bei dem das Fördergut durch ein Vakuum angesaugt und/oder das Filterrohr durch Überdruck gereinigt wird.

Insgesamt ergibt sich eine effiziente Lösung der eingangs genannten Probleme.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1 bis 3:: jeweils einen Längsschnitt durch eine erfindungsgemäße Vorrichtung;
- Fig. 4:: ein perforiertes Rohr mit eingesetztem rohrförmigen Filter im Längsschnitt als Detail der Vorrichtung;
- Fig. 5 bis 7:: schematisch dargestellte Querschnittsformen gemäß Linie V-VII der Fig. 4 für ein Filterrohr;
- Fig. 8, 9:: jeweils eine schematisierte Seitenansicht einer besonderen Anordnung des Filterrohres.

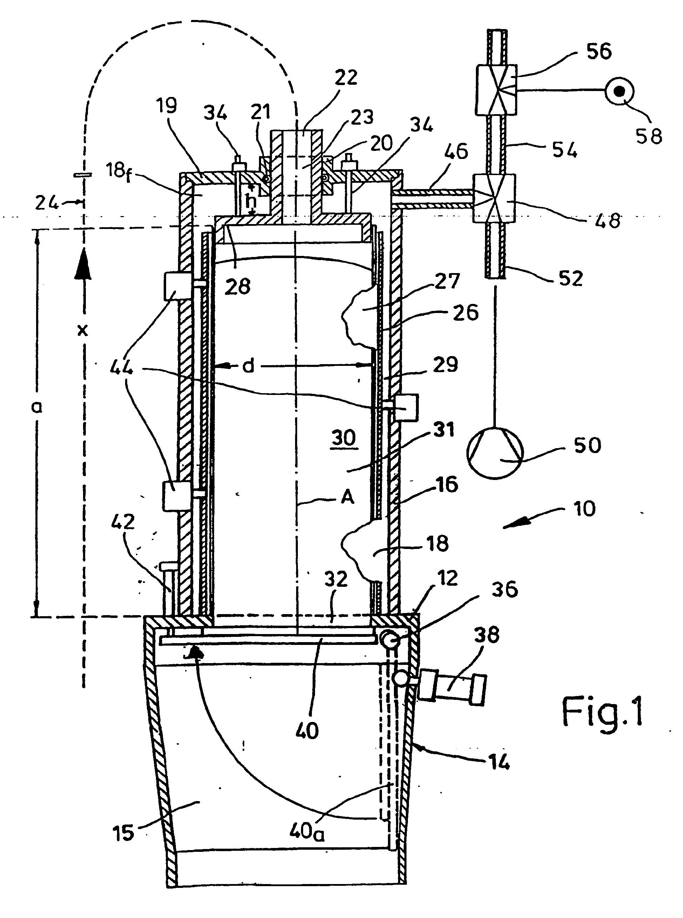

Eine erfindungsgemäße Vorrichtung 10 zum Überführen von staub-, pulver-, korn- oder granulatartigen Stoffen als Fördergut weist gemäß Fig. 1 auf einer Deckelplatte 12 eines einen Sockel bildenden Auffangbehälters 14 ein rohrförmiges Gehäuse 16 einer Arbeitskammer 18 auf, die nach oben hin von einer Firstplatte 19 überspannt wird. Diese ist in der Rohrachse A von einem kurzen Rohrstutzen 22 durchsetzt, der ein Einlassventil 23 enthalten kann und der von einem Kragen 20 der Firstplatte 19 -- unter Zwischenschaltung eines Dichtringes 21 -- umfangen ist. An den Rohrstutzen 22 ist eine bei 24 angedeutete Förderleitungfür in Pfeilrichtung x fließendes Fördergut -- mit einem in der Arbeitskammer 18 angebrachten perforierten Innenrohr 26 angeschlossen; dieses begrenzt mit jenem Gehäuse 16 einen Spaltraum 29.

Der Rohrstutzen 22 mündet an einem Firstdeckel 28 eines rohrförmig gestalteten Filtereinsatzes 30, der koaxial im Innenraum 27 des Innenrohres 26 verläuft. Der Firstdeckel 28 ist mit einer sich zwischen ihm und der Firstplatte 19 erstreckenden Spanneinrichtung 34 in der Arbeitskammer 18 aufgehängt, und letztere endet auf der -- sowohl das Innenrohr 26 als auch das Gehäuse 16 der Arbeitskammer 18 tragenden -- Deckelplatte 12 des Auffangbehälters 14. Zu dessen Innenraum 15 hin ist die Deckelplatte 12 mit einem Bodendurchbruch 32 als Austragsöffnung versehen, welch letztere vom rohrartigen Filtereinsatz 30 sowie dem Innenrohr 26 umgeben ist.

Dem Bodendurchbruch 32 ist ein an der Lagerstelle 36 schwenkbar angelenktes Klappventil 40 zugeordnet, das aus einer bei 40ₐ skizzierten Ruhelage mittels einer Kolben/Zylinder-Einheit 38 in seine Schließstellung überführt wird, in welcher es den Bodendurchbruch 32 von unten her abdeckt. Ein in Schließstellung für den erforderlichen Schließdruck sorgender Schließkolben 42 durchgreift hier die Deckelplatte 12 zum Klappventil 40 hin.

In dem Gehäuse 16 sind -- in Fig. 1 drei erkennbare -- Vibratoren 44 angebracht, welche auf das Innenrohr 26 und den Filtereinsatz 30 rüttelnd einwirken. Nicht dargestellt ist, dass die Vibratoren 44 beispielsweise auch an der oben erwähnten Spanneinrichtung 34 für den Filtereinsatz (30) angreifen können.

Den von der Firstplatte 19 und dem Firstdeckel 28 begrenzten und in seiner Höhe h begrenzt einstellbaren Kopfabschnitt 18_{f} der Arbeitskammer 18 verbindet ein Radialstutzen 46 mit einem Ventil 48, welches zwischen einer -- von einer Vakuumpumpe 50 ausgehenden -- Vakuumleitung 52 sowie einer Gasleitung 54 angeordnet ist; letztere enthält ein Einlassventil 56, das seinerseits zur Regelung des Gasdruckes an ein Steuerorgan 58 angeschlossen ist.

Durch den von der Vakuumpumpe 48 erzeugten Unterdruck wird das Fördergut über die Zuführleitung 24 angesaugt und in die Arbeitskammer 18 eingebracht. Während dieses Vorganges -- oder bei der Entleerung -- wird das in das perforierte Innenrohr 26 eingesetzte Filterrohr 30 mittels der Vibratoren 44, die mit einer Frequenz von 20 bis 150 Hz arbeiten, in Schwingungen versetzt, und so ein Anhaften des pulverförmigen Gutes vermieden. Die Vibratoren 44 dienen vor allem der Reinigung bzw. Reinhaltung des Filterrohres 30.

Danach wird über das Ventil 48 Luft in die Arbeitskammer 18 eingelassen und das Fördergut über das Klappventil 40 ausgetragen. Letzteres kann je nach dem zu fördernden Produkt durch ein Schmetterling-, Schieber-, Kugelventil oder eine Mehrkammerschleuse od.dgl. ersetzt werden. Das Reinigen des Filterrohres 30 erfolgt durch die durch das Ventil 48 eintretende Luft bzw. durch Druckluft oder Gas. Während des Reinigungsvorganges wird der Filtereinsatz bzw. das Filterrohr 30 über die Vibratoren 44 in Schwingung gehalten.

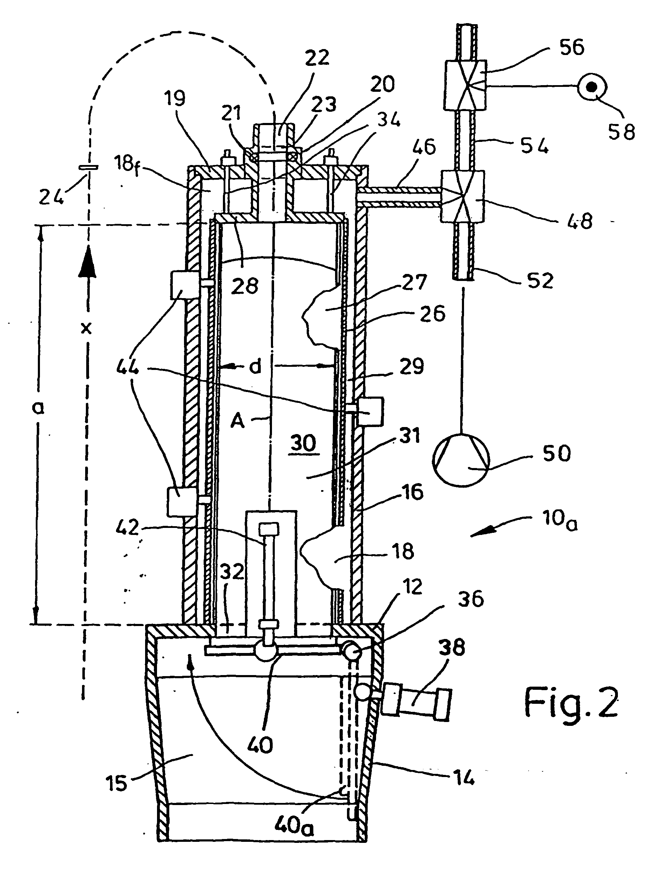

Die Vorrichtung 10ₐ der Fig. 2 unterscheidet sich von der vorstehend erörterten Vorrichtung 10 zum einen durch die Lage des Schließkolbens 42 für das Klappventil 40; dieser ist im Innenraum 27 des perforierten Innenrohres 26 angeordnet. Zum anderen geschieht hier die Reinigung des Filterrohres 30 durch Vibration oder Luft; das Ventil 48 steht nicht mit der Gasleitung 52 in Verbindung.

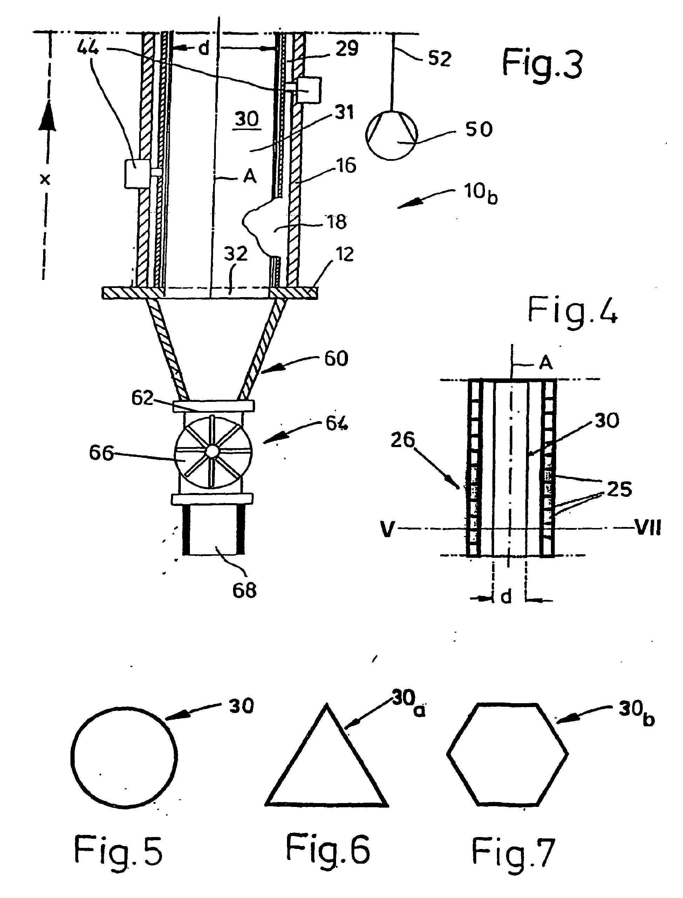

Die Vorrichtung 10_{b} der Fig. 3 entspricht oberhalb des Bodendurchbruchs 32 der Vorrichtung 10 der Fig. 1. Unterhalb der Bodendurchbruch 32 ist ein querschnittlich trichterförmiger Sockel 60 vorgesehen, der in eine Schleuseinrichtung 62 mit motorgetriebenem Schleusenrad 64 übergeht; letzteres weist acht Dosierkammer 66 auf. Unterhalb dieses Schleusenrades 64 ist ein Austrag 68 angeordnet.

Fig. 4 zeigt vor allem die Perforation des Innenrohres 26; dieses ist mit runden, rechteckigen oder polygonen Wandlöchern 25 versehen. Es kann aber -- wie nicht gezeigtauch aus einem Drahtnetz bestehen.

Die Fig. 5 bis 7 verdeutlichen querschnittlich Variationen des Filterrohres 30, 30ₐ, 30_{b}, nämlich einen zylindrischen, einen dreiecksförmigen sowie einen hexagonalen bzw. polygonalen Querschnitt.

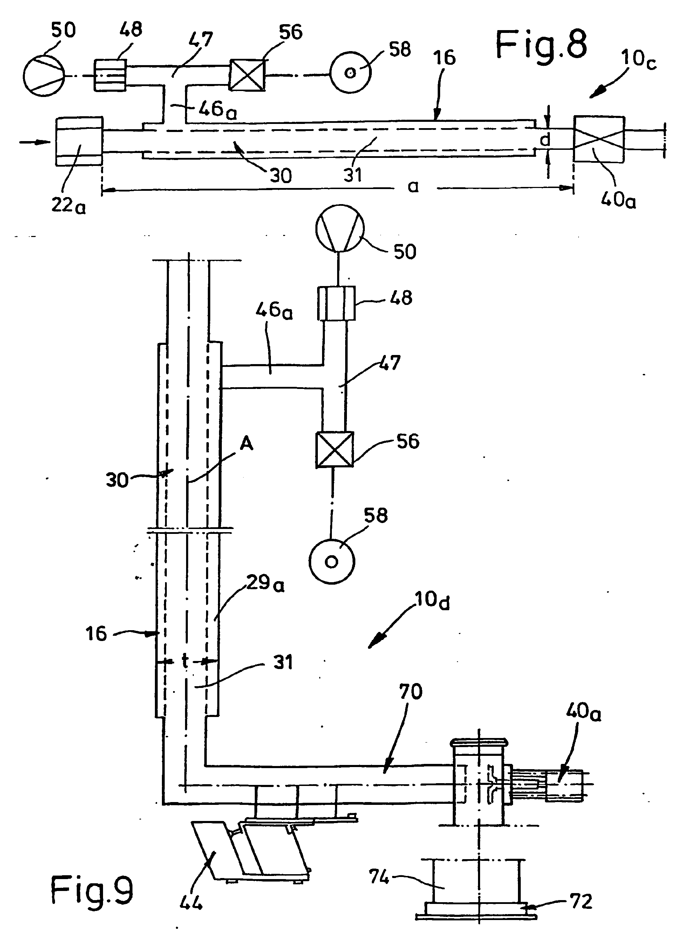

In Fig. 8 ist an einer Vorrichtung 10ₑ ein Filterrohr 30 eines Durchmessers d von 80 mm sowie einer Länge a von 800 mm in horizontaler Lage zwischen einem Rohrstutzen 22ₐ sowie einem Klappventil 40ₐ eingesetzt. Der hier vom Gehäuse 16 aufwärts weisende Radialstutzen 46ₐ als Teil eines T-Stückes 47 verbindet das Filterrohr 30 einerseits mit dem Einlassventil 56 am Steuerorgan 58 sowie zum anderen mit dem Ventil 48 vor der Vakuumpumpe 50. Der Einsatz dieser Anordnung wird im nachfolgenden Beispiel 6 näher erörtert.

Das Filterrohr 30 der Fig. 9 ragt im Gehäuse 16 eines Durchmessers t vertikal von einem Vibrationskanal 70 der Vorrichtung 10_{d} auf, der andernends an ein Klappventil 40ₐ angeschlossen sowie unterseitig mit einem elektrisch angetriebenen Vibrator 44 versehen ist. Unterhalb des Klappventils 40 ist auf einer Waage 72 ein Behälter 74 angeordnet, dessen Funktion dem unten erörterten Beispiel 7 zu entnehmen ist; nachfolgend werden mehrere Anwendungsbeispiele beschrieben.

### Beispiel 1:

Aus dem Auffangbehälter einer elektrostatischen Spritzanlage sollte das sehr feine Abfallpulver unter Luftabschluss in Transportbehälter (big-bags) zum Abtransport überführt werden. Die mittlere Korngröße betrug 1 µm und das Schüttgewicht 300 g/lt.

Das Filterrohr 30 der Anlage hatte einen Durchmesser d von 250 mm und eine Länge a von 1.000 mm. Mit dieser Anlage wurden 800 kg in 20 min. überführt.

### Beispiel 2:

Ein pharmazeutisches Pulver einer mittleren Korngröße von 25 µm und einer Schüttdichte von 600 g/lt sollte von einem Trichter in einen Mischer überführt werden.

Der Trichter einer Kapazität von 200 1., aus dem das Pulver übernommen und in den Mischer überführt wurde, war in einem Abstand von 10 m angeordnet. Die erfindungsgemäße Vorrichtung zur Förderung des Pulvers wurde auf dem Eingangsflansch des Mischers mit einem Durchmesser von 150 mm angebracht.

Zur Überführung wurde eine erfindungsgemäße Anlage mit einem Filterrohr 30 eines Durchmessers d von 100 mm und einer Länge a von 400 mm eingesetzt.

Die Fördermenge zum Mischer betrug 40 kg in 4 min.

### Beispiel 3:

In einer Mühle wurde die Luft (200 m³/h) sehr stark mit Feinstpulver einer Korngröße von 0,5 bis 1,5 µm angereichert.

Zum Reinigen der Luft wurde eine Anlage mit einem Filterrohr 30 mit einem Durchmesser d von 250 mm und einer Länge a von 500 mm verwendet. Der Einlass für die mit Pulver angereicherte Luft in das Filterrohr 30 erfolgte über die Leitung 24, an der ein Turboventilator einer Kapazität von 200 1 angebracht war, der den Unterdruck erzeugte.

Die Luft konnte so staubfrei gehalten werden.

### Beispiel 4:

Ein Silo für 100 t Mehl sollte mit einer Förderleistung von 25 t/h gefüllt werden. Die Förderhöhe betrug 12 m.

Mit einer Anlage, die ein Filterrohr 30 mit einem Durchmesser d von 1,2 m und eine Länge a von 2 m hatte und zum Ansaugen mit einem Turboverdichter einer Leistung von 2000 N/m³/h versehen war, wurde die notwendige Förderleistung ohne weiteres erreicht.

### Beispiel 5:

Aus einem Transportbehälter (big-bag) mit einer Kapazität von 1 t sollte ein pulverförmiges Material zu einer Dosiervorrichtung überführt werden, die zur Dosierung im Einlasstrichter mit einer Niveauregelung, Dosierschnecke und einem Wägesystem ausgerüstet sowie in einer Distanz von 12 m angeordnet war. Um Störungen für die Wägeeinrichtung zu vermeiden, erfolgte die Füllung des Einlasstrichters im abgeschalteten Zustand des Wägesystems.

Die zum Überführen verwendte erfindungsgemäße Vorrichtung hatte ein Filterrohr 30 mit einem Durchmesser d von 100 mm und einer Länge a von 500 mm.

Die überführte Pulvermenge betrug 500 kg/h.

### Beispiel 6:

Eine größere Menge von Kaliziumcarbonat (1t/h) sollte von einem Silo über eine Distanz von 100 mm zum Anwendungsort transportiert werden. Zum Fördern dieser Menge wurde das horizontal verlaufende Filterrohr 30 der Fig. 8 eingesetzt. Die Arbeitsweise für das Ansaugen des Pulvers entsprach der nachstehend zu Beispiel 7 beschriebenen, wobei der Ausstoß des Pulvers über die Strecke unter Druck erfolgte, der über das Einlassventil 56 zugeführt wurde.

### Beispiel 7:

Zum Fördern und Dosieren eines pulverförmigen Materials für die pharmazeutische Industrie wurde gemäß Fig. 9 in die Arbeitskammer 16 ein Filterrohr 30 mit einem Filtereinsatz eines Durchmessers d von 60 mm und einer Länge a von 600 mm eingebracht. Die zu dosierenden Mengen lagen zwischen 500 g und 5000 g mit einer Genauigkeit von ± 1g.

Die Stellung der wesentlichen Elemente bei Beginn des Dosiervorganges war:
- Rohrstutzen 22 offen;
- Auslassventil 40 geschlossen;
- Ventil 48 offen;
- Einlassventil 56 geschlossen.

Über den Rohrstutzen 22 wurde durch Öffnen des Ventils 48 zur Vakuumpumpe 50 hier das zu dosierende Pulver angesaugt und die Rohrkammer 29ₐ gefüllt. Dann wurde das Einlassventil 56 geöffnet, die Rohrkammer 29ₐ belüftet und das zu dosierende Pulver über den Vibrationskanal 70 durch den Vibrator 44 und das Auslassventil 40 in den auf der Waage 72 angeordneten Behälter 74 ausgetragen. Die Steuerung des Auslassventils 40 geschah über die Waage 72. Danach wurden die Ventile 40ₐ, 48, 56 automatisch wieder in ihre Ausgangsstellung gebracht.

## Patentansprüche

1. Vorrichtung zum Überführen eines staub-, pulver-, korn- oder granulatartigen Fördergutes aus einem Lagerbehälter in einen Arbeits- oder Überführungsbehälter, od.dgl. Aufnahmeraum, mit einem Austragsquerschnitt sowie mit einer an eine Zuführleitung (24) für das Fördergut angeschlossenen Arbeitskammer (18), in die zumindest eine Leitung (46) für ein Strömungsmittel mündet, zwischen dem und dem Fördergut eine perforierte Wandung (26) einer Innenkammer (27) angeordnet ist, die von einem die Arbeitskammer begrenzenden Gehäuse (16) umgeben ist, wobei die Zuführleitung für das Fördergut in einen rohrartigen Raum (31) übergeht und die Innenkammer in der an eine Leitung (52, 54) angeschlossenen Arbeitskammer angeordnet ist,
**dadurch gekennzeichnet,**
**dass** die perforierte Wandung ein Innenrohr (26) bildet, in dessen Innenraum (27) koaxial ein rohrförmiger Filtereinsatz (30) verläuft, der mit dem Gehäuse (16), einen Spaltraum (29) bestimmt sowie einends mit einem an die Zuführleitung (24) angeschlossenen Firstdeckel (28) versehen ist.

2. Vorrichtung nach Anspruch 1, **dadurch gekennzeichnet, dass** die Querschnittsform des Filtereinsatzes (30) der Querschnittsform des ihn umgebenden Innenrohres (26) entspricht.

3. Vorrichtung nach Anspruch 1 oder 2, **dadurch gekennzeichnet, dass** die Längsachse (A) des Gehäuses (16) der Arbeitskammer (18) die Achslage des Filtereinsatzes (30) und/oder des Innenrohres (26) bestimmt.

4. Vorrichtung nach Anspruch 1 oder 3, **dadurch gekennzeichnet, dass** ein Firstdeckel (28) des Filtereinsatzes (30) mit einer Firstplatte (19) des Gehäuses (16) durch wenigstens eine Spanneinrichtung (34) verbunden ist, wobei die Firstplatte einen an den Spaltraum (27) anschließenden Kopfraum (18_{f}) von dem Filterraum (31) des Filtereinsatzes (30) trennt.

5. Vorrichtung nach Anspruch 4, **dadurch gekennzeichnet, dass** die Höhe (h) des Kopfraumes (18_{f}) veränderlich gestaltet ist.

6. Vorrichtung nach Anspruch 4 oder 5, **dadurch gekennzeichnet, dass** der Firstdeckel (28) und die Firstplatte (19) durch die sie durchsetzende Zuführleitung (24) verbunden sind und der Abschnitt der Zuführleitung zwischen dem Firstdeckel und der Firstplatte mit einem Einlassventil (23) versehen ist.

7. Vorrichtung nach einem der Ansprüche 1 bis 6, **dadurch gekennzeichnet, dass** an den Filterraum (31) des Filtereinsatzes (30) ein axialer Rohrstutzen (22, 22a) anschließt, der anderseits mit der Zuführleitung (24) verbunden ist sowie als Abschnitt der Zuführleitung zwischen dem Firstdeckel und der Firstplatte verläuft.

8. Vorrichtung nach Anspruch 7, **dadurch gekennzeichnet, dass** der Rohrstutzen (22, 22ₐ) mit dem Firstdeckel (28) des Filtereinsatzes (30) verbunden ist sowie die Firstplatte (19) des Gehäuses (16) durchsetzt, in welcher er durch wenigstens einen Dichtring (21) abgedichtet lagert.

9. Vorrichtung nach Anspruch 7 oder 8, **dadurch gekennzeichnet, dass** der mit dem Einlassventil (23) versehene Rohrstutzen (22) als Abschnitt der Zuführleitung (24) im Kopfraum (18_{f}) verläuft.

10. Vorrichtung mit einer an eine Vakuumquelle (50) angeschlossenen Arbeitskammer (18) nach einem der Ansprüche 1 bis 9, **dadurch gekennzeichnet, dass** die Vakuumquelle (50) und eine Gasquelle unter Zwischenschaltung eines Ventils (48) ein gemeinsames Mündungsrohr (46, 46a) für die Arbeitskammer (18) aufweisen.

11. Vorrichtung nach Anspruch 10, **dadurch gekennzeichnet, dass** dem Ventil (48) in einer Gasleitung (54) der Gasquelle ein Einlassventil (56) vorgeordnet ist.

12. Vorrichtung nach Anspruch 1 und 10, **dadurch gekennzeichnet, dass** die Vakuumquelle (50) mit einem Ventil (48) versehen und dieses durch eine Leitung (47) mit dem Einlassventil (56) einer Gasquelle verbunden ist, wobei die Leitung als T-Stück mit der Arbeitskammer (18) zugeordnetem Mündungsrohr (46a) ausgebildet ist.

13. Vorrichtung nach Anspruch 10 oder 12, **dadurch gekennzeichnet, dass** das Mündungsrohr (46, 46a) an den Kopfraum (18f) des Arbeitsraumes (18) angeschlossen ist.

14. Vorrichtung nach einem der Ansprüche 1 bis 13, **dadurch gekennzeichnet, dass** dem Innnenrohr (26) und/oder dem Filtereinsatz (30) Vibrationsorgane (44) zugeordnet sind, die bevorzugt am Gehäuse (16) lagern.

15. Vorrichtung nach Anspruch 14, **dadurch gekennzeichnet, dass** das Vibrationsorgan (44) an der Spanneinrichtung (34) für den Filtereinsatz (30) angeordnet und/oder mit mit einer Frequenz zwischen 20 und 150 Hz. versehen ist.

16. Vorrichtung nach einem der Ansprüche 1 bis 15, **dadurch gekennzeichnet, dass** der Filterraum (31) auslassseitig mit einem Verschlussorgan (40, 40a) versehen ist und/oder an seinem unteren Ende einem Bodendurchbruch (32) des die Arbeitskammer (18) umgebenden Gehäuses (16) zugeordnet ist, wobei der Bodendurchbruch durch ein Verschlussorgan (40) verschließbar ausgebildet ist.

17. Vorrichtung nach Anspruch 16, **dadurch gekennzeichnet, dass** der Bodendurchbruch (32) in der Deckelplatte (12) eines dem Gehäuse (16) zugeordneten Behälters (14, 60) vorgesehen und/oder dem Bodendurchbruch eine motorgetriebene Schleuseinrichtung (62) zum schrittweisen Übertragen des Fördergutes in einen angeschlossenen Auffangbehälter angeordnet ist.

18. Vorrichtung nach Anspruch 17, **dadurch gekennzeichnet, dass** die motorbetriebene Schleuseinrichtung (62) drehbar und mit mehreren Dosierkammern (66) versehen ist, die bevorzugt radial in einem Schleusenrad (64) vorgesehen sind.

19. Vorrichtung nach einem der Ansprüche 1 bis 16, **dadurch gekennzeichnet, dass** der Filterraum (31) austragsseitig in einen Vibrationskanal (70) mündet, der andernends mit einem Verschlussorgan (40a) versehen ist.

20. Vorrichtung nach Anspruch 19, **dadurch gekennzeichnet, dass** dem Verschlussorgan (40a) ein mit einem Wiegeelement (72) versehener Behälter (74) nachgeordnet ist.

21. Vorrichtung nach Anspruch 19, **gekennzeichnet durch** ein Klappventil oder ein Schmetterlingsventil als Verschlussorgan (40, 40a) für den Filterraum (31) oder durch ein Kugelventil oder einen Schieber als Verschlussorgan für den Filterraum.

22. Vorrichtung nach einem der Ansprüche 1 bis 21, **dadurch gekennzeichnet, dass** der Filtereinsatz (30) bzw. das Innenrohr (26) von runder, dreieckiger oder mehreckiger Querschnittsform ist.

23. Vorrichtung nach einem der Ansprüche 1 bis 22, **dadurch gekennzeichnet, dass** das perforierte Innenrohr (26) runde, dreieckige und/oder polygone Löcher (25) aufweist oder aus einem Drahtnetz gefertigt ist.

24. Vorrichtung nach einem der Ansprüche 1 bis 23, **dadurch gekennzeichnet, dass** die Oberfläche des Filtereinsatzes (30) zumindest zwei Dritteln der Querschnittsfläche der Innenrohres (26) entspricht.

25. Vorrichtung nach einem der Ansprüche 1 bis 24, **dadurch gekennzeichnet, dass** der Durchmesser (d) des Filterrohres (30) zwischen 5 mm und 1000 mm liegt, bevorzugt zwischen 200 mm und 900 mm.

26. Vorrichtung nach einem der Ansprüche 1 bis 25, **dadurch gekennzeichnet, dass** der Durchmesser des Filterrohres zwischen 10 mm und 600 mm liegt, bevorzugt zwischen 10 mm und 150 mm.

27. Vorrichtung nach einem der Ansprüche 1 bis 26, **dadurch gekennzeichnet, dass** die Länge (a) des Filterrohres (30) zwischen 25 mm und 5000 mm liegt, bevorzugt zwischen 1000 mm und 4500 mm, und/oder dass die Länge des Filterrohres zwischen 500 mm und 3000 mm liegt, bevorzugt zwischen 50 mm und 600 mm.

28. Verfahren zum Überführen eines staub-, pulver-, korn- oder granulatartigen Fördergutes mit einer Vorrichtung (10, 10a, 10b) nach einem der vorstehenden Ansprüche, bei dem das Fördergut durch Vakuum angesaugt und das Filterrohr (30) durch Überdruck gereinigt wird.

## Claims

1. Device for transferring a dust-like, pulverulent, grain-like or granular material from a storage container to a working or transfer container or similar receiving space, comprising a discharge cross section and comprising a working chamber (18) which is connected to a supply line (24) for the material to be conveyed and into which at least one line (46) for a flow medium opens, a perforated wall (26) of an inner chamber (27) being arranged between the flow medium and the material to be conveyed and being surrounded by a housing (16) delimiting the working chamber, wherein the supply line for the material to be conveyed leads into a tubular space (31) and the inner chamber is arranged in the working chamber connected to a line (52, 54), **characterised in that** the perforated wall forms an inner tube (26) in the interior (27) of which a tubular filter insert (30) which defines a gap (29) together with the housing (16) and is provided at one end with a top cover (28) connected to the supply line (24) extends coaxially.

2. Device according to claim 1, **characterised in that** the cross-sectional shape of the filter insert (30) corresponds to the cross-sectional shape of the inner tube (26) surrounding it.

3. Device according to claim 1 or claim 2, **characterised in that** the longitudinal axis (A) of the housing (16) of the working chamber (18) determines the axial position of the filter insert (30) and/or of the inner tube (26).

4. Device according to claim 1 or claim 3, **characterised in that** a top cover (28) of the filter insert (30) is connected to a top plate (19) of the housing (16) by means of at least one clamping device (34), the top plate separating a head space (18_{f}) adjoining the gap (29) from the filter space (31) of the filter insert (30).

5. Device according to claim 4, **characterised in that** the height (h) of the head space (18_{f}) is variable.

6. Device according to claim 4 or claim 5, **characterised in that** the top cover (28) and the top plate (19) are connected by means of the supply line (24) traversing them and the section of the supply line between the top cover and the top plate is provided with an inlet valve (23).

7. Device according to one of claims 1 to 6, **characterised in that** an axial socket (22, 22ₐ) adjoins the filter space (31) of the filter insert (30), connected at its other end to the supply line (24) and extending as a section of the supply line between the top cover and the top plate.

8. Device according to claim 7, **characterised in that** the socket (22, 22ₐ) is connected to the top cover (28) of the filter insert (30) and traverses the top plate (19) of the housing (16) in which it is mounted in a sealed manner by means of at least one sealing ring (21).

9. Device according to claim 7 or claim 8, **characterised in that** the socket (22) provided with the inlet valve (23) extends as a section of the supply line (24) in the head space (18_{f}).

10. Device comprising a working chamber (18) connected to a vacuum source (50) according to one of claims 1 to 9, **characterised in that** the vacuum source (50) and a gas source have a common outlet pipe (46, 46ₐ) for the working chamber (18) with the interposition of a valve (48).

11. Device according to claim 10, **characterised in that** an inlet valve (56) is arranged upstream of the valve (48) in a gas line (54) of the gas source.

12. Device according to claim 1 and claim 10, **characterised in that** the vacuum source (50) is provided with a valve (48) and the latter is connected by means of a line (47) to the inlet valve (56) of a gas source, the line being in the form of a T-piece with an outlet pipe (46ₐ) associated with the working chamber (18).

13. Device according to claim 10 or claim 12, **characterised in that** the outlet pipe (46, 46ₐ) is connected to the head space (18_{f}) of the working space (18).

14. Device according to one of claims 1 to 13, **characterised in that** vibration members (44) preferably mounted on the housing (16) are associated with the inner tube (26) and/or the filter insert (30).

15. Device according to claim 14, **characterised in that** the vibration member (44) is arranged on the clamping device (34) for the filter insert (30) and/or is provided with a frequency of between 20 and 150 Hz.

16. Device according to one of claims 1 to 15, **characterised in that** the filter space (31) is provided at its outlet end with a closure member (40, 40ₐ) and/or is associated at its lower end with a bottom opening (32) of the housing (16) surrounding the working chamber (18), the bottom opening being designed in such a manner that it can be closed by means of a closure member (40).

17. Device according to claim 16, **characterised in that** the bottom opening (32) is provided in the cover plate (12) of a container (14, 60) associated with the housing (16) and/or a motor-driven lock device (62) for the gradual transfer of the material to an adjoining receiver is associated with the bottom opening.

18. Device according to claim 17, **characterised in that** the motor-driven lock device (62) is rotatable and is provided with a plurality of metering chambers (66) preferably provided radially in a lock wheel (64).

19. Device according to one of claims 1 to 16, **characterised in that** the filter space (31) opens at the discharge end into a vibration channel (70) provided at its other end with a closure member (40ₐ).

20. Device according to claim 19, **characterised in that** a container (74) provided with a weighing element (72) is arranged downstream of the closure member (40ₐ).

21. Device according to claim 19, **characterised by** a flap valve or a butterfly valve as the closure member (40, 40ₐ) for the filter space (31) or by a ball valve or a slide valve as the closure member for the filter space.

22. Device according to one of claims 1 to 21, **characterised in that** the filter insert (30) or the inner tube (26) has a round, triangular or polygonal cross-sectional shape.

23. Device according to one of claims 1 to 22, **characterised in that** the perforated inner tube (26) has round, triangular and/or polygonal holes (25) or is made of a wire mesh.

24. Device according to one of claims 1 to 23, **characterised in that** the surface of the filter insert (30) corresponds to at least two thirds of the cross-sectional area of the inner tube (26).

25. Device according to one of claims 1 to 24, **characterised in that** the diameter (d) of the filter tube (30) is between 5 mm and 1000 mm, preferably between 200 mm and 900 mm.

26. Device according to one of claims 1 to 25, **characterised in that** the diameter of the filter tube is between 10 mm and 600 mm, preferably between 10 mm and 150 mm.

27. Device according to one of claims 1 to 26, **characterised in that** the length (a) of the filter tube (30) is between 25 mm and 5000 mm, preferably between 1000 mm and 4500 mm, and/or that the length of the filter tube is between 500 mm and 3000 mm, preferably between 50 mm and 600 mm.

28. Method of transferring a dust-like, pulverulent, grain-like or granular material by means of a device (10, 10ₐ, 10_{b}) according to one of the preceding claims, in which the material to be conveyed is sucked in by a vacuum and the filter tube (30) is cleaned by excess pressure.

## Revendications

1. Dispositif pour transférer un produit à transporter du type poussière, poudre, grain ou granulé d'un récipient de stockage dans un récipient de travail ou un récipient de transfert, ou dans un espace de réception similaire, avec une section de sortie et avec une chambre de travail (18) raccordée à une conduite d'arrivée (24) pour le produit à transporter, dans laquelle débouche au moins une conduite (46) pour un moyen d'écoulement, entre lequel et le produit à transporter est disposée une paroi (26) perforée d'une chambre intérieure (27) qui est entourée par un boîtier (16) délimitant la chambre de travail, la conduite d'arrivée pour le produit à transporter se transformant en un espace (31) tubulaire et la chambre intérieure étant disposée dans la chambre de travail raccordée à une conduite (52, 54),
**caractérisé en ce que**,
- la paroi perforée forme un tube intérieur (26), à l'intérieur (27) duquel est agencé sur le même axe un élément filtrant (30) de forme tubulaire, qui détermine avec le boîtier (16) un espace creux ou intervalle (29) et qui est doté sur une extrémité d'un couvercle de sommet (28) raccordé à la conduite d'arrivée (24).

2. Dispositif selon la revendication 1, **caractérisé en ce que** la fente de section de l'élément filtrant (30) correspond à la forme de section du tube intérieur (26) qui l'entoure.

3. Dispositif selon la revendication 1 ou 2, **caractérisé en ce que** l'axe longitudinal (A) du boîtier (16) de la chambre de travail (18) détermine la position d'axe de l'élément filtrant (30) et/ou du tube intérieur (26).

4. Dispositif selon la revendication 1 ou 3, **caractérisé en ce qu'**un couvercle de sommet (28) de l'élément filtrant (30) est relié à une plaque de sommet (19) du boîtier (16) par au moins un dispositif de serrage (34), la plaque de sommet séparant un espace supérieur (18_{f}) faisant suite à l'espace creux ou intervalle (27) de l'espace de filtre (31) de l'élément filtrant (30).

5. Dispositif selon la revendication 4, **caractérisé en ce que** la hauteur (h) de l'espace supérieur (18_{f}) est conçue de façon variable.

6. Dispositif selon la revendication 4 ou 5, **caractérisé en ce que** le couvercle de sommet (28) et la plaque de sommet (19) sont reliés par la conduite d'arrivée (24) qui les traverse et la partie de la conduite d'arrivée entre le couvercle de sommet et la plaque de sommet est dotée d'une vanne d'entrée (23).

7. Dispositif selon l'une quelconque des revendications 1 à 6, **caractérisé en ce que** l'espace de filtre (31) de l'élément filtrant (30) est suivi d'une tubulure de tube (22, 22a) axiale, qui est reliée d'autre part à la conduite d'arrivée (24) et est agencée comme partie de la conduite d'arrivée entre le couvercle de sommet et la plaque de sommet.

8. Dispositif selon la revendication 7, **caractérisé en ce que** la tubulure de tube (22, 22a) est reliée au couvercle de sommet (28) de l'élément filtrant (30) et traverse la plaque de sommet (19) du boîtier (16), dans laquelle elle est logée et rendue étanche par au moins par une bague d'étanchéité (21).

9. Dispositif selon la revendication 7 ou 8, **caractérisé en ce que** la tubulure de tube (22) dotée de la vanne d'entrée (23) est agencée comme partie de la conduite d'arrivée (24) dans l'espace supérieur (18_{f}).

10. Dispositif avec une chambre de travail (18) raccordée à une source de vide (50) selon l'une quelconque des revendications 1 à 9, **caractérisé en ce que** la source de vide (50) et une source de gaz présentent avec l'intercalage d'une vanne (48) un tube de débouché (46, 46a) commun pour la chambre de travail (18).

11. Dispositif selon la revendication 10, **caractérisé en ce qu'**une vanne d'entrée (56) est disposée en amont de la vanne (48) dans une conduite de gaz (54) de la source de gaz.

12. Dispositif selon les revendications 1 et 10, **caractérisé en ce que** la source de vide (50) est dotée d'une vanne (48) et celle-ci est reliée par une conduite (47) à la vanne d'entrée (56) d'une source de gaz, la conduite étant réalisée comme une pièce en T avec tube de débouché (46a) associé à la chambre de travail (18).

13. Dispositif selon la revendication 10 ou 12, **caractérisé en ce que** le tube de débouché (46, 46a) est raccordé à l'espace supérieur (18f) de l'espace de travail (18).

14. Dispositif selon l'une quelconque des revendications 1 à 13, **caractérisé en ce que** des organes de vibration (44), qui sont logés de préférence sur le boîtier (16), sont associés au tube intérieur (26) et/ou à l'élément filtrant (30).

15. Dispositif selon la revendication 14, **caractérisé en ce que** l'organe de vibration (44) est disposé sur le dispositif de serrage (34) pour l'élément filtrant (30) et/ou est doté d'une fréquence comprise entre 20 et 150 Hz.

16. Dispositif selon l'une quelconque des revendications 1 à 15, **caractérisé en ce que** l'espace de filtre (31) est doté côté sortie d'un organe de fermeture (40, 40a) et/ou est associé sur son extrémité inférieure à un percement de fond (32) du boîtier (16) entourant la chambre de travail (18), le percement de fond étant réalisé par un organe de fermeture (40) de façon à pouvoir fermer.

17. Dispositif selon la revendication 16, **caractérisé en ce que** le percement de fond (32) est prévu dans la plaque de couvercle (12) d'un récipient (14, 60) associé au boîtier (16) et/ou un dispositif de sas (62) entraîné par moteur est disposé dans le percement de fond pour le transfert progressif du produit à transporter dans un récipient collecteur raccordé.

18. Dispositif selon la revendication 17, **caractérisé en ce que** le dispositif de sas (62) entraîné par moteur peut tourner et est doté de plusieurs chambres de dosage (66), qui sont prévues de préférence radialement dans une roue à sas (64).

19. Dispositif selon l'une quelconque des revendications 1 à 16, **caractérisé en ce que** l'espace de filtre (31) débouche côté évacuation dans un canal à vibration (70), qui est doté côté extrémité d'un organe de fermeture (40a).

20. Dispositif selon la revendication 19, **caractérisé en ce qu'**un récipient (74) doté d'un élément de pesage (72) est disposé en aval de l'organe de fermeture (40a).

21. Dispositif selon la revendication 19 **caractérisé par** une soupape à clapet ou une vanne papillon comme organe de fermeture (40, 40a) pour l'espace de filtre (31) ou par une soupape à bille ou une valve à tiroir comme organe de fermeture pour l'espace de filtre.

22. Dispositif selon l'une quelconque des revendications 1 à 21, **caractérisé en ce que** l'élément filtrant (30) ou le tube intérieur (26) a une forme de section ronde, triangulaire ou polygonale.

23. Dispositif selon l'une quelconque des revendications 1 à 22, **caractérisé en ce que** le tube intérieur (26) perforé présente des trous (25) ronds, triangulaires, et/ou polygonaux ou est fabriqué à partir d'un treillis en fil métallique.

24. Dispositif selon l'une quelconque des revendications 1 à 23, **caractérisé en ce que** la surface de l'élément filtrant (30) correspond au moins à deux tiers de la surface de section du tube intérieur (26).

25. Dispositif selon l'une quelconque des revendications 1 à 24, **caractérisé en ce que** le diamètre (d) du tube de filtre (30) se situe entre 5 mm et 1000 mm, de préférence entre 200 mm et 900 mm.

26. Dispositif selon l'une quelconque des revendications 1 à 25, **caractérisé en ce que** le diamètre du tube de filtre (30) se situe entre 10 mm et 600 mm, de préférence entre 10 mm et 150 mm.

27. Dispositif selon l'une quelconque des revendications 1 à 26, **caractérisé en ce que** la longueur (a) du tube de filtre (30) se situe entre 25 mm et 5000 mm, de préférence entre 1000 mm et 4500 mm, et/ou **en ce que** la longueur du tube de filtre se situe entre 500 mm et 3000 mm, de préférence entre 50 mm et 600 mm.

28. Procédé pour transférer un produit à transporter, de type poussière, poudre, grain ou granulé avec un dispositif (10, 10a, 10b) selon l'une quelconque des revendications précédentes, dans lequel le produit à transporter est aspiré par vide et le tube de filtre (30) est nettoyé par surpression.
